# EUROPEAN PATENT APPLICATION

(11) **EP 4 797 012 A1**
(43) Date of publication of application: **26.08.2026**
(21) Application number: 25159217.6
(22) Date of filing: 20.02.2025
(51) Int. Cl.: G05B 13/04, G05B 17/02, F27D 19/00

(54) **A METHOD AND SYSTEM FOR OPTIMIZING PRODUCTION IN A CEMENT KILN BY USING A DYNAMIC DIGITAL TWIN**

(71) Applicant: Innomotics GmbH, 90441 Nürnberg (DE)
(72) Inventor: SCHOONE, Sunny, 91052 Erlangen (DE); A, Balakrishnan, 560021 Bangalore, karnataka (IN); SZABO, László, 1022 Budapest (HU)
(74) Representative: Michalski Hüttermann & Partner mbB

(57) **Abstract**

A method and system for optimizing production in a cement kiln (102) using a dynamic digital twin. The method includes receiving input from an operator to select a production strategy, increasing a deviation percentage for a specific control parameter, detecting a change in a process condition of the cement kiln (102), retrieving current values of control parameters, and selecting an optimization data point using a dynamic digital twin of the cement kiln (102). The system comprises a memory (204) and a processor (202) configured to perform these steps. The dynamic digital twin integrates real-time and synthetic data to simulate kiln conditions and optimize control parameters. The system provides real-time visualization and allows operators to suggest changes and visualize outcomes, enhancing production efficiency and maintaining clinker quality. The selected optimization data points are stored for future reference and continuous learning.

## Description

The present invention relates to the field of industrial process control and automation, specifically to optimizing production in a cement kiln by using a dynamic digital twin.

The cement manufacturing industry is a cornerstone of modern infrastructure, providing essential materials for the construction of buildings, roads, and other critical structures. The process of cement production involves the calcination of limestone and other raw materials in a rotary kiln, followed by the grinding of the resulting clinker with gypsum and other additives to produce cement. This process is highly energy-intensive and requires precise control over numerous parameters to ensure product quality, operational efficiency, and environmental compliance.

Historically, the control of cement manufacturing processes has relied on manual adjustments and heuristic-based methods, which often lead to suboptimal performance and increased operational costs. The advent of digital technologies and advanced data analytics offers new opportunities to enhance the efficiency and consistency of cement production. By leveraging real-time data, machine learning algorithms, and digital twins, it is possible to create more dynamic and adaptive control systems that respond to changing conditions in real-time, optimize resource use, and reduce emissions..

In light of above, it is an object of the invention to provide an efficient method and system for optimizing production in a cement kiln by using a dynamic digital twin

The object of the present invention is provided by a method for optimizing production in a cement kiln by using a dynamic digital twin. The method comprises receiving input from an operator to select a production strategy. An operator is a skilled technician or engineer responsible for overseeing and controlling the cement kiln's operations. The input provided by the operator includes selecting a specific production strategy, such as increasing production, optimizing fuel consumption, or stabilizing kiln operations. The input is captured through a user interface on the Human-Machine Interface (HMI) system, which allows the operator to interact with the system using a keyboard, mouse, or touchscreen.

The production strategy is a predefined plan or set of actions aimed at achieving specific operational goals in the cement kiln. For example, the production strategy may involve increasing kiln feed rate to maximize cement output. The operator selects the production strategy to address current operational needs, such as meeting higher demand for cement or improving energy efficiency. The selection criteria for the production strategy include factors like current production targets, fuel availability, environmental regulations, and historical performance data.

In the example of a cement kiln, the operator may choose to increase production by adjusting the kiln feed rate. The operator captures this input by selecting the "Increase Production" option on the HMI system and specifying the desired increase in feed rate. The HMI system then dynamically adjusts the control parameters, such as the kiln feed rate, fuel input, and temperature settings, to implement the selected production strategy. The operator's decision to select this strategy is based on criteria such as current market demand, the availability of raw materials, and the capacity of the kiln to handle increased production without compromising quality or efficiency.

The method comprises increasing a deviation percentage for a specific control parameter based on the selected production strategy. The relevance of the deviation percentage lies in its ability to allow fine-tuning of the control parameters to achieve optimal performance in the cement manufacturing process. The deviation percentage refers to a predetermined percentage change from a baseline value of a control parameter, which helps in adapting the process conditions to meet the desired production goals.

For example, in the cement manufacturing process, the operator might select a production strategy aimed at increasing the kiln feed rate to boost cement output. To implement this strategy, the operator increases the deviation percentage for the kiln feed rate control parameter. Suppose the baseline value for the kiln feed rate is 100 tons per hour. The operator decides to increase the deviation percentage by 5%, resulting in a new kiln feed rate of 105 tons per hour. The increase is necessary to meet higher production targets while ensuring that the kiln operates within safe and efficient limits.

A specific control parameter in the cement manufacturing process could be the fuel input rate to the kiln burner. Based on the selected production strategy of increasing cement output, the operator increases the fuel input rate by adjusting the deviation percentage. For instance, if the baseline fuel input rate is 500 kilograms per hour, the operator may increase the deviation percentage by 10%, resulting in a new fuel input rate of 550 kilograms per hour. This adjustment ensures that the increased kiln feed rate is supported by an adequate supply of fuel, maintaining the necessary temperature and energy levels for efficient clinker production.

The method ensures that the cement manufacturing process can be dynamically optimized by adjusting the deviation percentages of specific control parameters based on the selected production strategies, thereby achieving the desired operational goals while maintaining process stability and efficiency.

The method comprises detecting a change in a process condition of the cement kiln by monitoring at least one process parameter after the increase of the deviation percentage. A process condition refers to the current state of the cement manufacturing process, including variables such as temperature, pressure, fuel consumption, and material feed rates, which collectively determine the efficiency and quality of cement production. The process condition is crucial for maintaining optimal operation and preventing issues such as equipment damage or substandard product quality.

The at least one process parameter is monitored using various sensors and data acquisition systems integrated within the cement kiln. For example, temperature sensors measure the kiln's internal temperature, while flow meters track the fuel and material feed rates. These sensors continuously collect data, which is then transmitted to the Human-Machine Interface (HMI) system for real-time analysis.

In the cement manufacturing process, an example of a process parameter is the temperature of the kiln's sintering zone. This parameter is monitored closely because it directly affects the quality of the clinker produced. After the operator increases the deviation percentage for the kiln feed rate, the temperature of the sintering zone must be monitored to ensure that the kiln operates within the desired temperature range, preventing overheating or underheating.

The change in the process condition is detected by comparing the monitored data against predefined thresholds or patterns identified by the Artificial Intelligence (AI) model. The Al model, which may be a neural network or a regression model, uses input variables such as current temperature, fuel input rate, and material feed rate to predict the optimal operating conditions. The output variables of the Al model include adjusted control parameters and alerts for any deviations from the optimal conditions.

The Al model detects changes by analyzing the continuous stream of sensor data and identifying deviations from the expected patterns. For instance, if the sintering zone temperature rises above the acceptable range after increasing the kiln feed rate, the Al model flags this as a change in the process condition. The detection is achieved using algorithms trained on historical data from the cement manufacturing process, which includes various scenarios of kiln operation under different conditions.

The training dataset for the Al model comprises historical process data collected over time, including temperature readings, fuel consumption rates, material feed rates, and corresponding clinker quality metrics. By training the Al model on this comprehensive dataset, the system learns to recognize normal and abnormal patterns in the process conditions, enabling accurate detection and timely adjustments to maintain optimal operation.

The method comprises retrieving current values of a plurality of control parameters based on the detection of the change. Control parameters refer to adjustable variables that influence the cement kiln's operation. The current values are retrieved from the Supervisory Control and Data Acquisition (SCADA) system, which serves as the central hub for collecting and managing real-time data from various sensors and equipment within the cement manufacturing process.

In the cement manufacturing process, examples of the plurality of control parameters include the kiln feed rate, the fuel input rate, the kiln rotation speed, and the oxygen level at the kiln inlet. These parameters are critical for maintaining the desired operational conditions and ensuring the efficient production of high-quality cement.

The SCADA system retrieves the current values by continuously monitoring the data streams from sensors and control devices. For instance, the SCADA system collects data from flow meters to determine the current kiln feed rate and fuel input rate. Similarly, the SCADA system monitors the kiln rotation speed using rotary encoders and tracks the oxygen level at the kiln inlet through gas analyzers.

Once the SCADA system detects a change in the process condition, such as a deviation in the kiln temperature or an unexpected fluctuation in the feed rate, the SCADA system retrieves the current values of the relevant control parameters. These values are then used to inform the AI-powered Human-Machine Interface (HMI) system, which analyzes the data to determine the necessary adjustments to optimize the kiln's operation.

For example, if the SCADA system detects an increase in the kiln temperature beyond the optimal range, the system retrieves the current values of the fuel input rate and the oxygen level. The Al model then uses these values to recommend adjustments, such as reducing the fuel input rate or increasing the kiln rotation speed, to bring the temperature back within the desired range.

The method comprises selecting an optimization data point from a collection of data points within a margin of the updated deviation percentage by using a dynamic digital twin of the cement kiln. The collection of data points is generated from historical data and the retrieved current values of the plurality of control parameters. The optimization data point is selected using advanced machine learning algorithms, such as neural networks or regression models, which analyze the historical and real-time data to identify the optimal settings for the control parameters.

For example, in the cement manufacturing process, the dynamic digital twin of the cement kiln plays a crucial role in this optimization. The dynamic digital twin is a real-time, virtual representation of the physical kiln, incorporating both historical data and live sensor inputs to simulate the kiln's behavior under various conditions. The contents of the dynamic digital twin include detailed models of the kiln's thermodynamic processes, material flow, fuel consumption, and clinker production rates. These models are continuously updated with real-time data from the SCADA system, ensuring that the digital twin accurately reflects the current state of the kiln.

The relevance of the dynamic digital twin lies in its ability to provide a comprehensive and up-to-date simulation environment, allowing operators to test different control strategies and predict their outcomes before implementing them in the physical kiln. This capability is particularly important for optimizing complex processes like cement manufacturing, where even small adjustments can have significant impacts on efficiency and product quality.

The collection of data points within the dynamic digital twin includes historical operating conditions, such as past kiln feed rates, fuel input rates, temperatures, and oxygen levels, as well as the corresponding outcomes in terms of clinker quality and production efficiency. The margin refers to the allowable range of deviation from the baseline values of the control parameters. For example, if the baseline kiln feed rate is 100 tons per hour and the deviation percentage is set to 5%, the margin would include data points corresponding to feed rates between 95 and 105 tons per hour.

The machine learning algorithm processes this collection of data points to identify patterns and correlations between the control parameters and the desired outcomes. For instance, the algorithm might determine that increasing the kiln feed rate to 102 tons per hour while simultaneously adjusting the fuel input rate to 520 kilograms per hour and the oxygen level to 18% results in optimal clinker quality and production efficiency. This combination of control parameter values represents the selected optimization data point..

The method comprises controlling the plurality of control parameters of the industrial process based on the selected optimization data point to optimize production in the cement kiln. An example of the data dimension of the selected optimization data point includes multiple control parameters such as the kiln feed rate, fuel input rate, kiln rotation speed, and oxygen level at the kiln inlet. For instance, the selected optimization data point may include a kiln feed rate of 102 tons per hour, a fuel input rate of 520 kilograms per hour, a kiln rotation speed of 3 revolutions per minute, and an oxygen level of 18%.

The processor controls the plurality of control parameters by interfacing with the SCADA system, which manages the real-time data and control signals from various sensors and actuators within the cement kiln. The processor uses the selected optimization data point to adjust the control settings accordingly. For example, the processor sends a control signal to the feed system to increase the kiln feed rate to 102 tons per hour. Simultaneously, the processor adjusts the fuel valves to ensure the fuel input rate is set to 520 kilograms per hour, modifies the motor speed to achieve the desired kiln rotation speed of 3 revolutions per minute, and regulates the air supply to maintain the oxygen level at 18%.

Controlling the plurality of control parameters based on the optimization data points optimizes production by ensuring that the kiln operates under the most efficient and stable conditions. For example, maintaining the kiln feed rate at 102 tons per hour while optimizing the fuel input and oxygen levels ensures that the combustion process is efficient, reducing fuel consumption and minimizing emissions. The precise control of the kiln rotation speed helps in achieving uniform heat distribution, which is crucial for producing high-quality clinker.

By using the selected optimization data point, the processor ensures that all control parameters are adjusted in a coordinated manner, resulting in a balanced and optimized operation of the cement kiln. This approach maximizes production efficiency by minimizing energy waste, reducing operational costs, and maintaining consistent product quality. The continuous feedback loop between the processor, the SCADA system, and the dynamic digital twin allows for real-time adjustments and adaptive optimization, ensuring that the kiln performs at its best under varying conditions.

The method comprises using the dynamic digital twin to identify, from the historical data, one or more past changes in the process condition. The one or more past changes are determined to be similar to the detected change in the process condition based on predefined similarity criteria.

The dynamic digital twin is used to identify past changes in the process condition by leveraging its comprehensive database of historical data and real-time sensor inputs. For example, in the cement manufacturing process, the dynamic digital twin continuously collects and stores data on key parameters like the sintering zone temperature, fuel input rate, and oxygen levels. When a change in the process condition is detected, such as an unexpected rise in the sintering zone temperature, the dynamic digital twin searches the historical database for similar instances where the sintering zone temperature exhibited a similar rise.

The one or more past changes in the process condition refer to historical events where the operational variables deviated from their normal ranges and required adjustments to maintain optimal performance. These past changes are represented in software as time-stamped records of parameter values and the corresponding corrective actions taken. For example, a past change could include a situation where the kiln feed rate was increased, causing a rise in the sintering zone temperature, and the subsequent adjustments made to the fuel input rate and oxygen levels to stabilize the temperature.

The processor compares the detected change in the process condition with the one or more past changes in the historical data by using predefined similarity criteria. These criteria may include thresholds for parameter deviations, rate of change, and the duration of the change. The processor analyzes the historical records to find instances that match the current situation based on these criteria. For example, if the sintering zone temperature rises by 50 degrees Celsius over a period of 10 minutes, the processor searches the historical data for similar temperature increases within the same time frame.

The past changes are represented in software as structured datasets, often stored in a relational database or a time-series database. These datasets include the values of relevant control parameters, timestamps, and any corrective actions taken. The dynamic digital twin uses these representations to simulate the past scenarios and evaluate the effectiveness of the corrective actions. By comparing the detected change in the process condition with the historical data, the dynamic digital twin provides recommendations for optimal adjustments based on proven strategies.

In the cement manufacturing process, if the current sintering zone temperature rise is similar to a past event where the temperature was successfully stabilized by adjusting the fuel input rate and oxygen levels, the dynamic digital twin will recommend similar adjustments. The processor then uses these recommendations to control the plurality of control parameters, ensuring that the kiln operates efficiently and the quality of the clinker is maintained.

The method comprises creating a simulation environment to enable an operator to suggest changes in the plurality of control parameters. The operator can visualize one or more potential outcomes of implementing the suggested changes. A simulation environment is a virtual representation of the cement manufacturing process that mimics the real-time behavior of the kiln and associated systems. The simulation environment is created using the dynamic digital twin, which integrates real-time sensor data, historical data, and advanced process models to replicate the operational conditions of the cement kiln.

In the cement manufacturing process, the simulation environment includes detailed models of the kiln's thermodynamic processes, material flow, fuel consumption, and clinker production rates. For example, the simulation environment can replicate the effects of varying the kiln feed rate, fuel input rate, oxygen levels, and kiln rotation speed on the overall production efficiency and clinker quality. The dynamic digital twin continuously updates the simulation environment with real-time data from the SCADA system, ensuring that the virtual representation accurately reflects the current state of the kiln.

The operator is enabled to suggest changes through an intuitive user interface on the Human-Machine Interface (HMI) system. The HMI system provides interactive tools such as sliders, input fields, and graphical controls that allow the operator to adjust the plurality of control parameters. For example, the operator can use the HMI system to increase the kiln feed rate from 100 tons per hour to 105 tons per hour or to adjust the fuel input rate from 500 kilograms per hour to 550 kilograms per hour. The plurality of control parameters includes variables such as the kiln feed rate, fuel input rate, kiln rotation speed, and oxygen level at the kiln inlet.

By suggesting changes in the simulation environment, the operator can visualize potential outcomes before implementing them in the actual kiln. Examples of potential outcomes include improvements in production efficiency, reductions in fuel consumption, stabilization of temperature profiles, and enhancements in clinker quality. For instance, the operator can simulate the impact of increasing the kiln feed rate on the sintering zone temperature and observe whether the temperature remains within the optimal range.

The processor uses the simulation environment to detect the effects of the suggested changes by running the virtual models and analyzing the resulting data. When the operator adjusts a control parameter, the processor simulates the new operating conditions and generates predictions of key performance indicators such as energy consumption, emission levels, and product quality. The processor compares these predictions with predefined performance targets and alerts the operator if the suggested changes are likely to achieve the desired outcomes.

For example, if the operator suggests increasing the kiln feed rate, the processor simulates the change and predicts that the increased feed rate will lead to higher production efficiency without exceeding the acceptable temperature range. The processor then provides this information to the operator, who can decide whether to implement the change in the real kiln.

The method comprises enabling an operator to define and rank the plurality of control parameters based on user-defined priorities for the selected production strategy. The method comprises integrating both real-time data and synthetic data for handling the process condition using the dynamic digital twin. Synthetic data refers to artificially generated data that simulates potential conditions.

Defining and ranking the plurality of control parameters are crucial steps to ensure that the most critical aspects of the cement manufacturing process are prioritized according to the production goals. User-defined priorities allow the operator to specify which parameters are most important based on the current production strategy. For example, if the selected production strategy is to maximize output, the operator may rank the kiln feed rate and fuel input rate as the highest priorities. Conversely, if the strategy focuses on reducing emissions, the operator may prioritize oxygen levels and fuel efficiency.

User-defined priorities are linked to the production strategy by aligning the control parameters with the specific objectives of the strategy. For instance, in a production strategy aimed at increasing output, the operator may define the priorities to ensure that the kiln feed rate is optimized first, followed by adjustments to the fuel input rate and kiln rotation speed. These priorities guide the dynamic digital twin in focusing on the most impactful parameters when simulating potential changes and recommending adjustments.

The integration of real-time data and synthetic data is achieved through the dynamic digital twin, which serves as a comprehensive simulation environment for the cement manufacturing process. Real-time data is continuously collected from sensors and control systems via the SCADA system, providing up-to-date information on parameters such as temperature, pressure, fuel consumption, and material feed rates. This real-time data ensures that the dynamic digital twin accurately reflects the current state of the kiln.

Synthetic data is generated using advanced algorithms and process models to simulate potential conditions that may not be present in the real-time data. This synthetic data can include scenarios such as extreme temperature fluctuations, variations in fuel quality, or unexpected equipment malfunctions. The synthetic data is received from predictive models and machine learning algorithms that analyze historical data and generate plausible future conditions.

In the cement manufacturing process, the dynamic digital twin integrates real-time data and synthetic data to create a robust simulation environment. For example, if the operator's priority is to minimize fuel consumption while maintaining clinker quality, the dynamic digital twin uses real-time data on current fuel input rates and clinker quality metrics, combined with synthetic data on potential variations in fuel quality. This integration allows the dynamic digital twin to simulate a range of scenarios and identify the optimal control settings to achieve the desired outcomes.

The method comprises storing the selected optimization data point as a new baseline in a digitized database for future reference and continuous learning.

The method comprises providing real-time visualization of at least one change in the at least one process parameter using the dynamic digital twin.

The method also comprises visualizing the impact of the change on the production efficiency of the cement kiln.

The method comprises storing the selected optimization data point as a new baseline in a digitized database for future reference and continuous learning. In the cement manufacturing process, the dynamic digital twin identifies an optimal set of control parameters, such as a kiln feed rate of 105 tons per hour, a fuel input rate of 550 kilograms per hour, and an oxygen level of 18%. Once these parameters have been determined to enhance production efficiency, the system stores these values as a new baseline in a digitized database. This database acts as a comprehensive repository of historical and optimal data points, allowing the system to learn continuously from past adjustments and improvements. The stored baseline values serve as reference points for future optimizations, enabling the dynamic digital twin to quickly identify efficient operating conditions when similar scenarios arise.

The method comprises providing real-time visualization of at least one change in the at least one process parameter using the dynamic digital twin. In the context of the cement manufacturing process, real-time visualization is achieved through the Human-Machine Interface (HMI) system, which displays live data from the dynamic digital twin. For example, when the kiln feed rate is adjusted from 100 tons per hour to 105 tons per hour, the HMI system immediately visualizes this change, showing updated graphs and metrics that reflect the current state of the kiln. The dynamic digital twin processes the real-time data from the SCADA system, continuously updating the visual representation of the kiln's operational parameters. This real-time visualization allows the operator to monitor changes as they occur, ensuring that the adjustments lead to the desired outcomes without causing instability or inefficiency.

The method also comprises visualizing the impact of the change on the production efficiency of the cement kiln. When an operator increases the kiln feed rate, the dynamic digital twin not only visualizes the change in the feed rate but also simulates its impact on production efficiency. For example, the HMI system may display a projected increase in clinker output or a reduction in fuel consumption as a result of the adjusted feed rate. By integrating real-time data and predictive models, the dynamic digital twin can show how the change in the kiln feed rate affects overall production metrics such as throughput, energy efficiency, and emission levels. This visualization helps the operator understand the broader implications of the adjustments, allowing for more informed decision-making and continuous process improvement. The ability to visualize both the immediate and long-term impacts of parameter changes is crucial for optimizing the cement manufacturing process and achieving sustainable production goals.

An object of the present invention is achieved by a system for optimizing production in a cement kiln, comprising a memory and a processor operatively coupled to the memory. The processor is configured to receive input from an operator to select a production strategy, increase a deviation percentage for a specific control parameter based on the selected production strategy (where the deviation percentage refers to a predetermined percentage change from a baseline value of the control parameter), detect a change in a process condition of the cement kiln by monitoring at least one process parameter after the increase of the deviation percentage, retrieve current values of a plurality of control parameters based on the detection of the change (where control parameters refer to adjustable variables that influence the cement kiln's operation), select an optimization data point from a collection of data points within a margin of the updated deviation percentage by using a dynamic digital twin of the cement kiln (wherein the collection of data points is generated from historical data and the retrieved current values of the plurality of control parameters), and control the plurality of control parameters of the industrial process based on the selected optimization data point to optimize production in the cement kiln.

The system further comprises a processor configured to use the dynamic digital twin to identify, from the historical data, one or more past changes in the process condition, wherein the one or more past changes are determined to be similar to the detected change in the process condition based on predefined similarity criteria.

The system further comprises a processor configured to create a simulation environment to enable an operator to suggest changes in the plurality of control parameters and visualize one or more potential outcomes of implementing the suggested changes.

The system further comprises a processor configured to enable an operator to define and rank the plurality of control parameters based on user-defined priorities for the selected production strategy.

The system further comprises a dynamic digital twin that integrates both real-time data and synthetic data for handling the process condition, where synthetic data refers to artificially generated data that simulates potential conditions.

The system further comprises a processor configured to store the selected optimization data point as a new baseline in a digitized database for future reference and continuous learning.

The system further comprises a dynamic digital twin that provides real-time visualization of at least one change in the at least one process parameter and the impact of the at least one change on the production efficiency of the cement kiln.

An object of the present invention is achieved by a computer program product for optimizing production in a cement kiln by using a dynamic digital twin. The computer program product comprises a non-transitory computer-readable medium having computer-readable instructions stored thereon that, when executed by a processor, cause the processor to receive input from an operator to select a production strategy, increase a deviation percentage for a specific control parameter based on the selected production strategy (where the deviation percentage refers to a predetermined percentage change from a baseline value of the control parameter), detect a change in a process condition of the cement kiln by monitoring at least one process parameter after the increase of the deviation percentage, retrieve current values of a plurality of control parameters based on the detection of the change (where control parameters refer to adjustable variables that influence the cement kiln's operation), select an optimization data point from a collection of data points within a margin of the updated deviation percentage by using a dynamic digital twin of the cement kiln (wherein the collection of data points is generated from historical data and the retrieved current values of the plurality of control parameters), and control the plurality of control parameters of the industrial process based on the selected optimization data point to optimize production in the cement kiln.

The present invention is further described hereinafter with reference to illustrated embodiments shown in the accompanying drawings, in which the features of the individual objects claimed or described can readily be combined with one another. Hereinafter, the invention is illustrated and explained in more detail by way of example with reference to the figures. The features shown in the figures can be combined by a person skilled in the art to form new embodiments without departing from the scope of the invention. Elements of the same type are given the same reference character. It is shown in:
Fig. 1: is a block diagram of a system for optimizing production in a cement kiln by using a dynamic digital twin, in which an embodiment of the present invention can be implemented.
FIG. 2 is a block diagram of a control system, in which an embodiment of the present invention can be implemented. and
FIG. 3 is a process flowchart illustrating an exemplary method of is a optimizing production in a cement kiln by using a dynamic digital twin, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

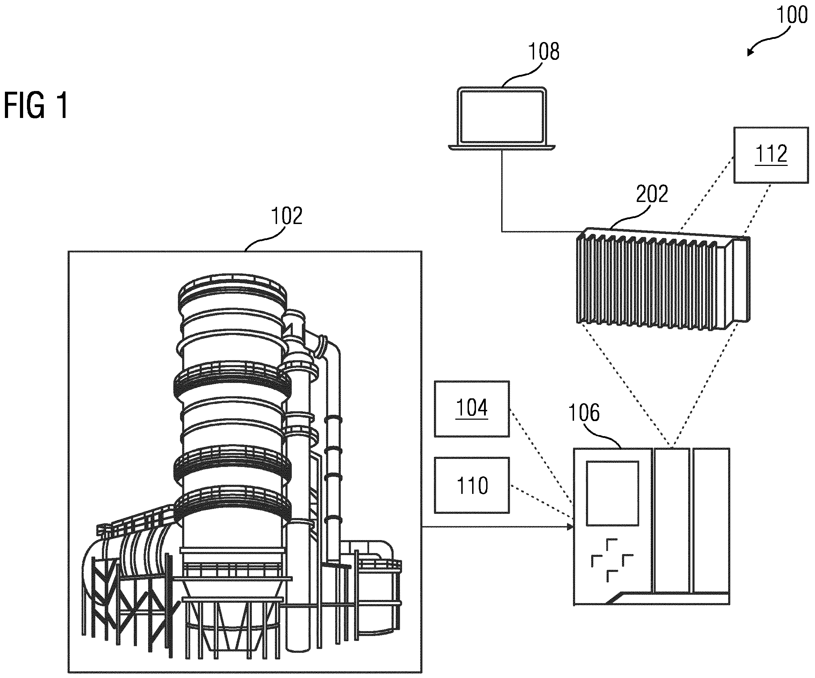

FIG. 1: is a block diagram of a system 100 for automated industrial process optimization of a cement manufacturing process, according to an embodiment of the present invention. In FIG 1, the system 100 includes one or more sensors 104, a control system 106, and a human machine interface 108. The control system 106 comprises a processor 202 such as a programmable logic controller. The processor 202 comprises an automation module 112 which is configured to automatically optimize the fuel consumption in the cement kiln 102.

The cement kiln 102 is a large, cylindrical vessel which is used during a pyroprocessing stage of cement production. Inside the cement manufacturing kiln 102, a plurality of raw materials are pyroprocessed to generate clinker. Examples of the plurality of raw materials include limestone, clay, or shale. The pyroprocessing happens at very high temperatures and is thus fuel-intensive. Examples of fuel consumed includes coal, natural gas, and oil. The fuel consumed by the cement manufacturing kiln is expensive, and thus by optimizing fuel consumption, return of interest can be optimized. Furthermore, a temperature of the cement manufacturing kiln is dependent on the fuel consumption of the cement manufacturing kiln. A stability of the cement manufacturing kiln is dependent on the temperature. Thus, by optimizing the fuel consumption, a stability of the cement manufacturing kiln can be maintained, and furthermore, a return of investment of the cement manufacturing kiln can be optimized.

The outputs of the cement manufacturing kiln 102 are primarily the clinker and waste gases. A quality and one or more properties of clinker has a significant impact on a final strength and a quality of cement produced by the cement manufacturing plant. Since the quality of clinker is proportional to a stability of the cement manufacturing kiln, optimizing the fuel consumption becomes of paramount importance.

The one or more sensors 104 are configured to capture a plurality of operational parameters from the cement manufacturing kiln 102.

The control system 106 is configured to coordinate and optimize one or more stages of cement production. The control system 106 is configured to process inputs from the one or more sensors 104 to manage activities such as precise mixing of raw materials, control of kiln temperature for clinker production, and timing of cooling processes to ensure quality of the final cement.

The human machine interface (HMI) 108 is configured to enable operators to interact directly with the control system 106. Operators can use HMI panels to monitor process variables like kiln temperature and motor speeds, adjust operational parameters, and troubleshoot issues from a centralized location. For instance, the HMI 108 is configured to display diagnostics from the cement kiln 102, to allow operators to make immediate adjustments or shutdowns to prevent damage or inefficiencies in the cement manufacturing kiln.

The processor 202, is typically a Programmable Logic Controller (PLC), which is crucial for executing complex control algorithms. In cement production, the PLC can automate repetitive tasks such as the sequential operation of valves for loading and unloading materials or the regulation of the grinding and baking processes. The processor 202 is further configured to analyze data captured by the one or more sensors 104.

The Carbon Monoxide (CO) probe 110 is a sensor specifically designed to measure a concentration of carbon monoxide in the cement kiln 102. The Carbon Monoxide probe 110 plays a role in monitoring and controlling a combustion process within the cement kiln 102.

The automation Module 112 comprises software code which, when executed by the processor 202, causes the processor 202 to early detect blockage of the carbon monoxide probe 110.

The automation module 112 incorporates software that, when executed by the processing unit 202, monitor a kiln inlet oxygen level and a kiln inlet nitrogen oxide level. For instance, the automation module 112 is configured to continuously analyze data from the one or more sensors 104 to monitor oxygen, nitrogen oxide, and carbon monoxide.

The automation module 112 is configured to cause the processor 202 to receive input from an operator to select a production strategy. An operator is a skilled technician or engineer responsible for overseeing and controlling the cement kiln 102's operations. The input provided by the operator includes selecting a specific production strategy, such as increasing production, optimizing fuel consumption, or stabilizing kiln operations. The input is captured through a user interface on the Human-Machine Interface (HMI) 108 system, which allows the operator to interact with the system using a keyboard, mouse, or touchscreen. The production strategy is a predefined plan or set of actions aimed at achieving specific operational goals in the cement kiln 102. For example, the production strategy may involve increasing the kiln feed rate to maximize cement output. The operator selects the production strategy to address current operational needs, such as meeting higher demand for cement or improving energy efficiency. The selection criteria for the production strategy include factors like current production targets, fuel availability, environmental regulations, and historical performance data.

In the example of a cement kiln 102, the operator may choose to increase production by adjusting the kiln feed rate. The operator captures this input by selecting the "Increase Production" option on the HMI 108 system and specifying the desired increase in feed rate. The HMI 108 system then dynamically adjusts the control parameters, such as the kiln feed rate, fuel input, and temperature settings, to implement the selected production strategy. The operator's decision to select this strategy is based on criteria such as current market demand, the availability of raw materials, and the capacity of the kiln to handle increased production without compromising quality or efficiency.

The automation module 112 is configured to cause the processor 202 to increase a deviation percentage for a specific control parameter based on the selected production strategy. The relevance of the deviation percentage lies in its ability to allow fine-tuning of the control parameters to achieve optimal performance in the cement manufacturing process. The deviation percentage refers to a predetermined percentage change from a baseline value of a control parameter, which helps in adapting the process conditions to meet the desired production goals.

For example, in the cement manufacturing process, the operator might select a production strategy aimed at increasing the kiln feed rate to boost cement output. To implement this strategy, the operator increases the deviation percentage for the kiln feed rate control parameter. Suppose the baseline value for the kiln feed rate is 100 tons per hour. The operator decides to increase the deviation percentage by 5%, resulting in a new kiln feed rate of 105 tons per hour. The increase is necessary to meet higher production targets while ensuring that the kiln operates within safe and efficient limits.

A specific control parameter in the cement manufacturing process could be the fuel input rate to the kiln burner. Based on the selected production strategy of increasing cement output, the operator increases the fuel input rate by adjusting the deviation percentage. For instance, if the baseline fuel input rate is 500 kilograms per hour, the operator may increase the deviation percentage by 10%, resulting in a new fuel input rate of 550 kilograms per hour. This adjustment ensures that the increased kiln feed rate is supported by an adequate supply of fuel, maintaining the necessary temperature and energy levels for efficient clinker production.

The automation module 112 is configured to cause the processor 202 to detect a change in a process condition of the cement kiln 102 by monitoring at least one process parameter after the increase of the deviation percentage. A process condition refers to the current state of the cement manufacturing process, including variables such as temperature, pressure, fuel consumption, and material feed rates, which collectively determine the efficiency and quality of cement production. The process condition is crucial for maintaining optimal operation and preventing issues such as equipment damage or substandard product quality.

The at least one process parameter is monitored using various sensors 104 and data acquisition systems integrated within the cement kiln 102. For example, temperature sensors measure the kiln's internal temperature, while flow meters track the fuel and material feed rates. These sensors 104 continuously collect data, which is then transmitted to the Human-Machine Interface (HMI) 108 system for real-time analysis.

In the cement manufacturing process, an example of a process parameter is the temperature of the kiln's sintering zone. This parameter is monitored closely because it directly affects the quality of the clinker produced. After the operator increases the deviation percentage for the kiln feed rate, the temperature of the sintering zone must be monitored to ensure that the kiln operates within the desired temperature range, preventing overheating or underheating.

The change in the process condition is detected by comparing the monitored data against predefined thresholds or patterns identified by the Artificial Intelligence (AI) model. The Al model, which may be a neural network or a regression model, uses input variables such as current temperature, fuel input rate, and material feed rate to predict the optimal operating conditions. The output variables of the Al model include adjusted control parameters and alerts for any deviations from the optimal conditions.

The Al model detects changes by analyzing the continuous stream of sensor 104 data and identifying deviations from the expected patterns. For instance, if the sintering zone temperature rises above the acceptable range after increasing the kiln feed rate, the Al model flags this as a change in the process condition. The detection is achieved using algorithms trained on historical data from the cement manufacturing process, which includes various scenarios of kiln operation under different conditions.

The training dataset for the Al model comprises historical process data collected over time, including temperature readings, fuel consumption rates, material feed rates, and corresponding clinker quality metrics. By training the Al model on this comprehensive dataset, the system learns to recognize normal and abnormal patterns in the process conditions, enabling accurate detection and timely adjustments to maintain optimal operation.

The automation module 112 is configured to cause the processor 202 to retrieve current values of a plurality of control parameters based on the detection of the change. Control parameters refer to adjustable variables that influence the cement kiln 102's operation. The current values are retrieved from the Supervisory Control and Data Acquisition (SCADA) system, which serves as the central hub for collecting and managing real-time data from various sensors 104 and equipment within the cement manufacturing process.

In the cement manufacturing process, examples of the plurality of control parameters include the kiln feed rate, the fuel input rate, the kiln rotation speed, and the oxygen level at the kiln inlet. These parameters are critical for maintaining the desired operational conditions and ensuring the efficient production of high-quality cement.

The SCADA system retrieves the current values by continuously monitoring the data streams from sensors 104 and control devices. For instance, the SCADA system collects data from flow meters to determine the current kiln feed rate and fuel input rate. Similarly, the SCADA system monitors the kiln rotation speed using rotary encoders and tracks the oxygen level at the kiln inlet through gas analyzers.

Once the SCADA system detects a change in the process condition, such as a deviation in the kiln temperature or an unexpected fluctuation in the feed rate, the SCADA system retrieves the current values of the relevant control parameters. These values are then used to inform the AI-powered Human-Machine Interface (HMI) 108 system, which analyzes the data to determine the necessary adjustments to optimize the kiln's operation.

For example, if the SCADA system detects an increase in the kiln temperature beyond the optimal range, the system retrieves the current values of the fuel input rate and the oxygen level. The Al model then uses these values to recommend adjustments, such as reducing the fuel input rate or increasing the kiln rotation speed, to bring the temperature back within the desired range.

The automation module 112 is configured to cause the processor 202 to select an optimization data point from a collection of data points within a margin of the updated deviation percentage by using a dynamic digital twin of the cement kiln 102. The collection of data points is generated from historical data and the retrieved current values of the plurality of control parameters. The optimization data point is selected using advanced machine learning algorithms, such as neural networks or regression models, which analyze the historical and real-time data to identify the optimal settings for the control parameters.

For example, in the cement manufacturing process, the dynamic digital twin of the cement kiln 102 plays a crucial role in this optimization. The dynamic digital twin is a real-time, virtual representation of the physical kiln, incorporating both historical data and live sensor 104 inputs to simulate the kiln's behavior under various conditions. The contents of the dynamic digital twin include detailed models of the kiln's thermodynamic processes, material flow, fuel consumption, and clinker production rates. These models are continuously updated with real-time data from the SCADA system, ensuring that the digital twin accurately reflects the current state of the kiln.

The relevance of the dynamic digital twin lies in its ability to provide a comprehensive and up-to-date simulation environment, allowing operators to test different control strategies and predict their outcomes before implementing them in the physical kiln. This capability is particularly important for optimizing complex processes like cement manufacturing, where even small adjustments can have significant impacts on efficiency and product quality.

The collection of data points within the dynamic digital twin includes historical operating conditions, such as past kiln feed rates, fuel input rates, temperatures, and oxygen levels, as well as the corresponding outcomes in terms of clinker quality and production efficiency. The margin refers to the allowable range of deviation from the baseline values of the control parameters. For example, if the baseline kiln feed rate is 100 tons per hour and the deviation percentage is set to 5%, the margin would include data points corresponding to feed rates between 95 and 105 tons per hour.

The machine learning algorithm processes this collection of data points to identify patterns and correlations between the control parameters and the desired outcomes. For instance, the algorithm might determine that increasing the kiln feed rate to 102 tons per hour while simultaneously adjusting the fuel input rate to 520 kilograms per hour and the oxygen level to 18% results in optimal clinker quality and production efficiency. This combination of control parameter values represents the selected optimization data point.

The automation module 112 is configured to cause the processor 202 to control the plurality of control parameters of the industrial process based on the selected optimization data point to optimize production in the cement kiln 102. An example of the data dimension of the selected optimization data point includes multiple control parameters such as the kiln feed rate, fuel input rate, kiln rotation speed, and oxygen level at the kiln inlet. For instance, the selected optimization data point may include a kiln feed rate of 102 tons per hour, a fuel input rate of 520 kilograms per hour, a kiln rotation speed of 3 revolutions per minute, and an oxygen level of 18%.

The processor 202 controls the plurality of control parameters by interfacing with the SCADA system, which manages the real-time data and control signals from various sensors 104 and actuators within the cement kiln 102. The processor 202 uses the selected optimization data point to adjust the control settings accordingly. For example, the processor 202 sends a control signal to the feed system to increase the kiln feed rate to 102 tons per hour. Simultaneously, the processor 202 adjusts the fuel valves to ensure the fuel input rate is set to 520 kilograms per hour, modifies the motor speed to achieve the desired kiln rotation speed of 3 revolutions per minute, and regulates the air supply to maintain the oxygen level at 18%.

Controlling the plurality of control parameters based on the optimization data points optimizes production by ensuring that the kiln 102 operates under the most efficient and stable conditions. For example, maintaining the kiln feed rate at 102 tons per hour while optimizing the fuel input and oxygen levels ensures that the combustion process is efficient, reducing fuel consumption and minimizing emissions. The precise control of the kiln rotation speed helps in achieving uniform heat distribution, which is crucial for producing high-quality clinker.

By using the selected optimization data point, the processor 202 ensures that all control parameters are adjusted in a coordinated manner, resulting in a balanced and optimized operation of the cement kiln 102. This approach maximizes production efficiency by minimizing energy waste, reducing operational costs, and maintaining consistent product quality. The continuous feedback loop between the processor 202, the SCADA system, and the dynamic digital twin allows for real-time adjustments and adaptive optimization, ensuring that the kiln 102 performs at its best under varying conditions.

The automation module 112 is configured to cause the processor 202 to use the dynamic digital twin to identify, from the historical data, one or more past changes in the process condition. The one or more past changes are determined to be similar to the detected change in the process condition based on predefined similarity criteria.

The dynamic digital twin is used to identify past changes in the process condition by leveraging its comprehensive database of historical data and real-time sensor 104 inputs. For example, in the cement manufacturing process, the dynamic digital twin continuously collects and stores data on key parameters like the sintering zone temperature, fuel input rate, and oxygen levels. When a change in the process condition is detected, such as an unexpected rise in the sintering zone temperature, the dynamic digital twin searches the historical database for similar instances where the sintering zone temperature exhibited a similar rise.

The one or more past changes in the process condition refer to historical events where the operational variables deviated from their normal ranges and required adjustments to maintain optimal performance. These past changes are represented in software as time-stamped records of parameter values and the corresponding corrective actions taken. For example, a past change could include a situation where the kiln feed rate was increased, causing a rise in the sintering zone temperature, and the subsequent adjustments made to the fuel input rate and oxygen levels to stabilize the temperature.

The processor 202 compares the detected change in the process condition with the one or more past changes in the historical data by using predefined similarity criteria. These criteria may include thresholds for parameter deviations, rate of change, and the duration of the change. The processor 202 analyzes the historical records to find instances that match the current situation based on these criteria. For example, if the sintering zone temperature rises by 50 degrees Celsius over a period of 10 minutes, the processor 202 searches the historical data for similar temperature increases within the same time frame.

The past changes are represented in software as structured datasets, often stored in a relational database or a time-series database. These datasets include the values of relevant control parameters, timestamps, and any corrective actions taken. The dynamic digital twin uses these representations to simulate the past scenarios and evaluate the effectiveness of the corrective actions. By comparing the detected change in the process condition with the historical data, the dynamic digital twin provides recommendations for optimal adjustments based on proven strategies.

In the cement manufacturing process, if the current sintering zone temperature rise is similar to a past event where the temperature was successfully stabilized by adjusting the fuel input rate and oxygen levels, the dynamic digital twin will recommend similar adjustments. The processor 202 then uses these recommendations to control the plurality of control parameters, ensuring that the kiln 102 operates efficiently and the quality of the clinker is maintained.

The automation module 112 is configured to cause the processor 202 to create a simulation environment to enable an operator to suggest changes in the plurality of control parameters. The operator can visualize one or more potential outcomes of implementing the suggested changes. A simulation environment is a virtual representation of the cement manufacturing process that mimics the real-time behavior of the kiln 102 and associated systems. The simulation environment is created using the dynamic digital twin, which integrates real-time sensor 104 data, historical data, and advanced process models to replicate the operational conditions of the cement kiln 102.

In the cement manufacturing process, the simulation environment includes detailed models of the kiln 102's thermodynamic processes, material flow, fuel consumption, and clinker production rates. For example, the simulation environment can replicate the effects of varying the kiln feed rate, fuel input rate, oxygen levels, and kiln rotation speed on the overall production efficiency and clinker quality. The dynamic digital twin continuously updates the simulation environment with real-time data from the SCADA system, ensuring that the virtual representation accurately reflects the current state of the kiln 102.

The operator is enabled to suggest changes through an intuitive user interface on the Human-Machine Interface (HMI) 108 system. The HMI 108 system provides interactive tools such as sliders, input fields, and graphical controls that allow the operator to adjust the plurality of control parameters. For example, the operator can use the HMI 108 system to increase the kiln feed rate from 100 tons per hour to 105 tons per hour or to adjust the fuel input rate from 500 kilograms per hour to 550 kilograms per hour. The plurality of control parameters includes variables such as the kiln feed rate, fuel input rate, kiln rotation speed, and oxygen level at the kiln inlet.

By suggesting changes in the simulation environment, the operator can visualize potential outcomes before implementing them in the actual kiln 102. Examples of potential outcomes include improvements in production efficiency, reductions in fuel consumption, stabilization of temperature profiles, and enhancements in clinker quality. For instance, the operator can simulate the impact of increasing the kiln feed rate on the sintering zone temperature and observe whether the temperature remains within the optimal range.

The processor 202 uses the simulation environment to detect the effects of the suggested changes by running the virtual models and analyzing the resulting data. When the operator adjusts a control parameter, the processor 202 simulates the new operating conditions and generates predictions of key performance indicators such as energy consumption, emission levels, and product quality. The processor 202 compares these predictions with predefined performance targets and alerts the operator if the suggested changes are likely to achieve the desired outcomes.

For example, if the operator suggests increasing the kiln feed rate, the processor 202 simulates the change and predicts that the increased feed rate will lead to higher production efficiency without exceeding the acceptable temperature range. The processor 202 then provides this information to the operator, who can decide whether to implement the change in the real kiln 102.

The automation module 112 is configured to cause the processor 202 to enable an operator to define and rank the plurality of control parameters based on user-defined priorities for the selected production strategy. The automation module 112 is configured to cause the processor 202 to integrate both real-time data and synthetic data for handling the process condition using the dynamic digital twin. Synthetic data refers to artificially generated data that simulates potential conditions.

Defining and ranking the plurality of control parameters are crucial steps to ensure that the most critical aspects of the cement manufacturing process are prioritized according to the production goals. User-defined priorities allow the operator to specify which parameters are most important based on the current production strategy. For example, if the selected production strategy is to maximize output, the operator may rank the kiln feed rate and fuel input rate as the highest priorities. Conversely, if the strategy focuses on reducing emissions, the operator may prioritize oxygen levels and fuel efficiency.

User-defined priorities are linked to the production strategy by aligning the control parameters with the specific objectives of the strategy. For instance, in a production strategy aimed at increasing output, the operator may define the priorities to ensure that the kiln feed rate is optimized first, followed by adjustments to the fuel input rate and kiln rotation speed. These priorities guide the dynamic digital twin in focusing on the most impactful parameters when simulating potential changes and recommending adjustments.

The integration of real-time data and synthetic data is achieved through the dynamic digital twin, which serves as a comprehensive simulation environment for the cement manufacturing process. Real-time data is continuously collected from sensors 104 and control systems via the SCADA system, providing up-to-date information on parameters such as temperature, pressure, fuel consumption, and material feed rates. This real-time data ensures that the dynamic digital twin accurately reflects the current state of the cement kiln 102.

Synthetic data is generated using advanced algorithms and process models to simulate potential conditions that may not be present in the real-time data. This synthetic data can include scenarios such as extreme temperature fluctuations, variations in fuel quality, or unexpected equipment malfunctions. The synthetic data is received from predictive models and machine learning algorithms that analyze historical data and generate plausible future conditions.

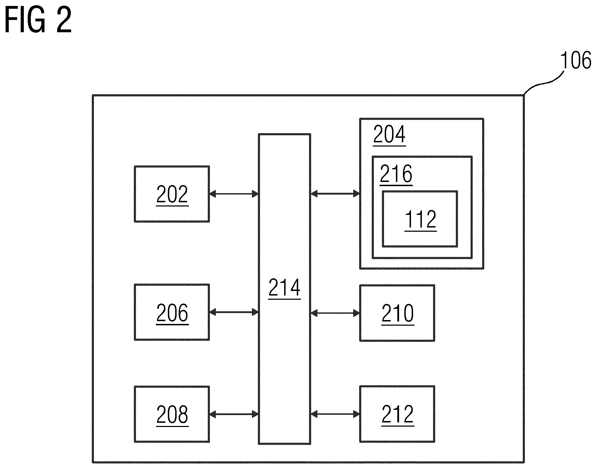

FIG. 2 is a block diagram of a control system 106, in which an embodiment of the present invention can be implemented. In FIG 2, the control system 106 includes a processor(s) 202, an accessible memory 204, a storage unit 206, a communication interface 208, an input-output unit 210, a network interface 212 and a bus 214.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processor(s) 202.

The storage unit 206 may be a non-transitory storage medium configured for storing a database which comprises server version of the plurality of programming blocks associated with the set of industrial domains.

The communication interface 208 is configured for establishing communication sessions between the cement kiln 102 and the control system 106. The communication interface 208 allows one or more control applications running on the HMI 108 to import/export project files into the control system 106. In an embodiment, the communication interface 208 interacts with the interface at the HMI 108 for allowing one or more plant operators to control the cement manufacturing kiln 102.

The input-output unit 210 may include input devices a keypad, touch-sensitive display, camera (such as a camera receiving gesture-based inputs), etc. capable of receiving one or more input signals, such as user commands to control the plurality of operational parameters. Also, the input-output unit 210 may be a display unit for displaying a graphical user interface which visualizes the plurality of operational parameters. The bus 214 acts as interconnect between the processor 202, the memory 204, and the input-output unit 210.

The network interface 212 may be configured to handle network connectivity, bandwidth and network traffic between the control system 106, the HMI 108, the one or more sensors 104 and the cement kiln 102.

Those of ordinary skilled in the art will appreciate that the hardware depicted in FIG 2 may vary for particular implementations.

For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of the control system 106 as is unique to the present disclosure or necessary for an understanding of the present disclosure is depicted and described.

The remainder of the construction and operation of the control system 106 may conform to any of the various current implementation and practices known in the art.

Those of ordinary skilled in the art will appreciate that the hardware depicted in FIG 2 may vary for particular implementations.

For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of the control system 106 as is unique to the present disclosure or necessary for an understanding of the present disclosure is depicted and described. The remainder of the construction and operation of the control system 106 may conform to any of the various current implementation and practices known in the art.

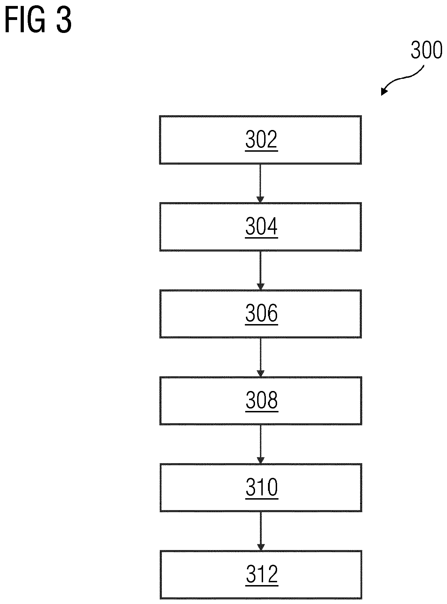

FIG. 3 is a process flowchart illustrating an exemplary method of automated industrial process optimization of a cement manufacturing process, according to an embodiment of the present invention. FIG. 3 is explained in conjunction with FIG. 1 and FIG. 2.

At step 302, input from an operator is received to select a production strategy. The operator uses the Human-Machine Interface (HMI) 108 system to interact with the control system 106 and choose a specific production strategy such as increasing production, optimizing fuel consumption, or stabilizing kiln 102 operations.

At step 304, a deviation percentage for a specific control parameter is increased based on the selected production strategy. The deviation percentage refers to a predetermined percentage change from a baseline value of the control parameter, allowing for fine-tuning of the control parameters to achieve optimal performance in the cement manufacturing process.

At step 306, a change in a process condition of the cement kiln 102 is detected by monitoring at least one process parameter after the increase of the deviation percentage. The process condition includes variables such as temperature, pressure, fuel consumption, and material feed rates, which determine the efficiency and quality of cement production.

At step 308, current values of a plurality of control parameters are retrieved based on the detection of the change. Control parameters refer to adjustable variables that influence the cement kiln 102's operation, such as kiln feed rate, fuel input rate, kiln rotation speed, and oxygen level at the kiln inlet. These values are retrieved from the Supervisory Control and Data Acquisition (SCADA) system.

At step 310, an optimization data point is selected from a collection of data points within a margin of the updated deviation percentage by using a dynamic digital twin of the cement kiln 102. The collection of data points is generated from historical data and the retrieved current values of the plurality of control parameters. The dynamic digital twin simulates the kiln 102's behavior under various conditions to identify the optimal settings for the control parameters.

At step 312, the plurality of control parameters of the industrial process is controlled based on the selected optimization data point to optimize production in the cement kiln 102. The processor 202 interfaces with the SCADA system to adjust the control settings, ensuring that the kiln 102 operates under the most efficient and stable conditions. The adjustments maximize production efficiency, minimize energy waste, reduce operational costs, and maintain consistent product quality.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference Numerals:

1. Cement kiln: 102
2. System for optimizing production: 100
3. Sensors: 104
4. Control system: 106
5. Human-Machine Interface (HMI): 108
6. Processor: 202
7. Automation module: 112
8. Carbon Monoxide (CO) probe: 110
9. Memory: 204
10. Storage unit: 206
11. Communication interface: 208
12. Input-output unit: 210
13. Network interface: 212
14. Bus: 214
15. Integrated Development Environment (IDE): 216

### Method Steps:

1. Receiving input from an operator to select a production strategy: Step 302
2. Increasing a deviation percentage for a specific control parameter based on the selected production strategy: Step 304
3. Detecting a change in a process condition of the cement kiln by monitoring at least one process parameter after the increase of the deviation percentage: Step 306
4. Retrieving current values of a plurality of control parameters based on the detection of the change: Step 308
5. Selecting an optimization data point from a collection of data points within a margin of the updated deviation percentage by using a dynamic digital twin of the cement kiln: Step 310
6. Controlling the plurality of control parameters of the industrial process based on the selected optimization data point to optimize production in the cement kiln: Step 312

## Claims

1. A method for optimizing production in a cement kiln (102) by using a dynamic digital twin, comprising the steps of:
receiving input from an operator to select a production strategy;
increasing a deviation percentage for a specific control parameter based on the selected production strategy, where the deviation percentage refers to a predetermined percentage change from a baseline value of the control parameter;
detecting a change in a process condition of the cement kiln (102) by monitoring at least one process parameter after the increase of the deviation percentage;
retrieving current values of a plurality of control parameters based on the detection of the change, where control parameters refer to adjustable variables that influence the cement kiln's (102) operation;
selecting an optimization data point from a collection of data points within a margin of the updated deviation percentage by using a dynamic digital twin of the cement kiln (102), wherein the collection of data points is generated from historical data and the retrieved current values of the plurality of control parameters;
controlling the plurality of control parameters of the industrial process based on the selected optimization data point to optimize production in the cement kiln (102).

2. The method of claim 1, further comprising:
using the dynamic digital twin to identify, from the historical data, one or more past changes in the process condition, wherein the one or more past changes are determined to be similar to the detected change in the process condition based on predefined similarity criteria.

3. The method of claim 1, further comprising:
creating a simulation environment to enable an operator to suggest changes in the plurality of control parameters, and visualize one or more potential outcomes of implementing the suggested changes.

4. The method of claim 1, further comprising:
enabling an operator to define and rank the plurality of control parameters based on user-defined priorities for the selected production strategy.

5. The method of claim 1, wherein:
the dynamic digital twin integrates both real-time data and synthetic data for handling the process condition, where synthetic data refers to artificially generated data that simulates potential conditions.

6. The method of claim 1, further comprising:
storing the selected optimization data point as a new baseline in a digitized database for future reference and continuous learning.

7. The method of claim 1, wherein:
the dynamic digital twin provides real-time visualization of at least one change in the at least one process parameter and the impact of the at least one change on the production efficiency of the cement kiln (102).

8. A system (100) for optimizing production in a cement kiln (102), comprising:
∘ a memory (204); and
∘ a processor (202) operatively coupled to the memory (204) and configured to:
receive input from an operator to select a production strategy;
increase a deviation percentage for a specific control parameter based on the selected production strategy, where the deviation percentage refers to a predetermined percentage change from a baseline value of the control parameter;
detect a change in a process condition of the cement kiln (102) by monitoring at least one process parameter after the increase of the deviation percentage;
retrieve current values of a plurality of control parameters based on the detection of the change, where control parameters refer to adjustable variables that influence the cement kiln's (102) operation;
select an optimization data point from a collection of data points within a margin of the updated deviation percentage by using a dynamic digital twin of the cement kiln (102), wherein the collection of data points is generated from historical data and the retrieved current values of the plurality of control parameters;
control the plurality of control parameters of the industrial process based on the selected optimization data point to optimize production in the cement kiln (102).

9. The system (100) of claim 8, wherein the processor (202) is further configured to:
use the dynamic digital twin to identify, from the historical data, one or more past changes in the process condition, wherein the one or more past changes are determined to be similar to the detected change in the process condition based on predefined similarity criteria.

10. The system (100) of claim 8, wherein the processor (202) is further configured to:
create a simulation environment to enable an operator to suggest changes in the plurality of control parameters, and visualize one or more potential outcomes of implementing the suggested changes.

11. The system (100) of claim 8, wherein the processor (202) is further configured to:
enable an operator to define and rank the plurality of control parameters based on user-defined priorities for the selected production strategy.

12. The system (100) of claim 8, wherein:
the dynamic digital twin integrates both real-time data and synthetic data for handling the process condition, where synthetic data refers to artificially generated data that simulates potential conditions.

13. The system (100) of claim 8, wherein the processor (202) is further configured to:
store the selected optimization data point as a new baseline in a digitized database for future reference and continuous learning.

14. The system (100) of claim 8, wherein:
the dynamic digital twin provides real-time visualization of at least one change in the at least one process parameter and the impact of the at least one change on the production efficiency of the cement kiln (102).

15. A computer program product for optimizing production in a cement kiln (102) by using a dynamic digital twin, the computer program product comprising a non-transitory computer-readable medium having computer-readable instructions stored thereon that, when executed by a processor (202), cause the processor (202) to:
receive input from an operator to select a production strategy;
increase a deviation percentage for a specific control parameter based on the selected production strategy, where the deviation percentage refers to a predetermined percentage change from a baseline value of the control parameter;
detect a change in a process condition of the cement kiln (102) by monitoring at least one process parameter after the increase of the deviation percentage;
retrieve current values of a plurality of control parameters based on the detection of the change, where control parameters refer to adjustable variables that influence the cement kiln's (102) operation;
select an optimization data point from a collection of data points within a margin of the updated deviation percentage by using a dynamic digital twin of the cement kiln (102), wherein the collection of data points is generated from historical data and the retrieved current values of the plurality of control parameters;
control the plurality of control parameters of the industrial process based on the selected optimization data point to optimize production in the cement kiln (102).
